# EUROPEAN PATENT APPLICATION

(11) **EP 4 836 559 A1**
(43) Date of publication of application: **04.11.2026**
(21) Application number: 25751619.5
(22) Date of filing: 07.02.2025
(51) Int. Cl.: H04W 72/0446

(54) **COMMUNICATION METHOD AND APPARATUS, AND COMPUTER-READABLE STORAGE MEDIUM**

(30) Priority: 08.02.2024 CN 202410177927
(71) Applicant: Honor Device Co., Ltd., Shenzhen, Guangdong 518040 (CN)
(72) Inventor: CHI, Liangang, Shenzhen, Guangdong 518040 (CN)
(74) Representative: MERH-IP Matias Erny Reichl Hoffmann Patentanwälte PartG mbB
(86) International application number: PCT/CN2025/076096
(87) International publication number: WO 2025/168020

(57) **Abstract**

This application provides a communication method and apparatus, and a computer-readable storage medium. The method may include: A terminal device determines a time domain resource position for downlink reception and a time domain resource position for uplink transmission. When the time domain resource position for downlink reception overlaps the time domain resource position for uplink transmission, based on a condition, the terminal device preferentially completes reception of a specific signal, and continue or discard subsequent transmission. In embodiments of this application, the terminal device may be enabled to perform transmission when uplink and downlink timings overlap, thereby improving a capacity of a network system.

## Description

This application claims priority to Chinese Patent Application No. 202410177927.6, filed with the China National Intellectual Property Administration on February 8, 2024 and entitled "COMMUNICATION METHOD AND APPARATUS, AND COMPUTER-READABLE STORAGE MEDIUM", which is incorporated herein by reference in its entirety.

### TECHNICAL FIELD

This application relates to the field of wireless communication technologies, and in particular, to a communication method and apparatus, and a computer-readable storage medium.

### BACKGROUND

A non-terrestrial network (non-terrestrial network, NTN), such as satellite communication, has advantages such as wide coverage, long communication distance, high reliability, high flexibility, and high throughput. Being immune to geographical environments, climatic conditions, and natural disasters, the NTN has been widely used in fields such as aeronautical communication, maritime communication, and military communication. Introducing satellites into a 5th generation (5th generation, 5G) mobile communication new radio (new radio, NR) technology can provide communication services for areas that can hardly be covered by a terrestrial network, such as oceans and forests, and can enhance reliability of 5G communication. For example, more stable and higher-quality communication services can be provided for trains, planes, and users on board, and more data transmission resources can also be provided to support a larger quantity of connections.

With evolution of a 5G NR system, a reduced-capability (reducedcapability, RedCap) terminal is introduced. The RedCap terminal has a lower air-interface capability, for example, supporting a smaller bandwidth and a lower modulation order, and having fewer antennas.

For the RedCap/eRedCap terminal device, a duplex capability of the RedCap/eRedCap terminal device is usually half-duplex frequency division duplex (half-duplex frequency division duplex, HD-FDD). In an NTN scenario, a coverage area of NTN communication is very wide. Considering larger cell coverage, longer round-trip time (round-triptime, RTT), and high-speed movement of a non-geostationary orbit (non-geostationary orbit, NGSO) satellite, a timing advance (timingadvance, TA) value of an HD-FDD terminal device may fluctuate greatly, leading to overlap between uplink and downlink timings. How the HD-FDD terminal device performs transmission when uplink and downlink timings overlap is an urgent problem to be resolved.

### SUMMARY

Embodiments of this application provide a communication method and apparatus, and a computer-readable storage medium, so that a terminal device may be enabled to perform transmission when uplink and downlink timings overlap, thereby improving a capacity of a network system.

According to a first aspect, this application provides a communication method. The method may be applied to a terminal device, or may be applied to an apparatus (for example, a chip, or a chip system, or a circuit) in the terminal device, or an apparatus that can be used together with the terminal device. The following uses an example in which the method is applied to the terminal device for description. For example, the terminal device in embodiments of this application may be a first-type terminal device. The first-type terminal device is a terminal device having a lower air-interface capability than an enhanced mobile broadband (enhancedmobilebroadband, eMBB) terminal. For example, the first-type terminal device is a RedCap/eRedCap terminal device. A duplex capability of the first-type terminal device is HD-FDD. The method may include: A terminal device determines a time domain resource position for downlink reception and a time domain resource position for uplink transmission; and preferentially completes reception of a downlink signal when the time domain resource position for downlink reception overlaps the time domain resource position for uplink transmission.

In the solution provided in this embodiment, the terminal device may determine a start time for uplink transmission based on a TA. In an NTN scenario, a TA value of the terminal device is large. As a result, uplink and downlink timings of the terminal device may overlap. In this embodiment of this application, for a terminal device with an HD-FDD duplex capability, when uplink and downlink timings overlap, the terminal device may preferentially complete reception of a downlink signal, so that the terminal device can be enabled to perform transmission when uplink and downlink timings overlap, thereby improving a capacity of a network system.

In a possible implementation, a start time of the time domain resource position for uplink transmission is earlier than an end time of the time domain resource position for downlink reception, or an end time of the time domain resource position for uplink transmission is later than a start time of the time domain resource position for downlink reception. According to the solution provided in this embodiment, for overlap between uplink and downlink timings, there may be two possible forms: The terminal device may switch from downlink reception to uplink transmission, and a system frame for sending uplink data by the terminal device is advanced relative to a corresponding downlink system frame due to the TA, which may be that a start time for uplink transmission may be earlier than an end time for downlink reception. Therefore, uplink and downlink timings overlap. Alternatively, the terminal device may switch from uplink transmission to downlink reception, and uplink transmission has not yet ended when a time for downlink reception arrives. In other words, an end time for uplink transmission is later than a start time for downlink reception. Therefore, uplink and downlink timings overlap.

In a possible implementation, the method further includes: determining whether to perform uplink transmission on a first time domain resource. The first time domain resource is a remaining time domain resource in a time domain resource for uplink transmission other than a time domain resource that overlaps a time domain resource for downlink reception.

In a possible implementation, determining whether to perform the uplink transmission on the first time domain resource includes: determining, based on the first time domain resource and a first threshold, whether to perform the uplink transmission on the first time domain resource.

In a possible implementation, the first threshold is a time domain resource length, and determining, based on the first time domain resource and the first threshold, whether to perform the uplink transmission on the first time domain resource includes: if the first time domain resource is less than or equal to the first threshold, discarding the uplink transmission on the first time domain resource; or if the first time domain resource is greater than the first threshold, performing the uplink transmission on the first time domain resource.

In a possible implementation, the first threshold is a proportion, and determining, based on the first time domain resource and the first threshold, whether to perform the uplink transmission on the first time domain resource includes: if a proportion of the first time domain resource in the time domain resource for uplink transmission is less than or equal to the first threshold, discarding the uplink transmission on the first time domain resource; or if a proportion of the first time domain resource in the time domain resource for uplink transmission is greater than the first threshold, performing the uplink transmission on the first time domain resource.

In a possible implementation, the first threshold is predefined in a protocol, or the first threshold is configured by a network device for the terminal device.

In a possible implementation, determining whether to perform the uplink transmission on the first time domain resource includes: if the first time domain resource includes N or more time domain resources for transmitting a demodulation reference signal (, DMRS), performing the uplink transmission on the first time domain resource, where N is an integer greater than 0; or if the first time domain resource includes less than N time domain resources for transmitting a DMRS, discarding the uplink transmission on the first time domain resource.

In a possible implementation, performing the uplink transmission on the first time domain resource includes: performing uplink transmission of data corresponding to the first time domain resource on the first time domain resource; or shifting transmission of data corresponding to the time domain resource for uplink transmission to start from the first time domain resource.

In a possible implementation, the time domain resource for downlink reception or the time domain resource for uplink transmission includes a transmission time interval (transmission time interval, TTI), and the TTI is one or more subframes (subframes), one or more slots (slots), or one or more mini-slots (mini-slots).

In a possible implementation, determining the time domain resource position for uplink transmission includes: receiving a signal from the network device; determining a downlink system frame timing of the terminal device based on the signal; determining a first TA value based on a position of the terminal device; receiving a second TA value from the network device; and determining the time domain resource position for uplink transmission based on the downlink system frame timing, the first TA value, and the second TA value.

According to a second aspect, this application provides a communication method. The method may be applied to a network device, or may be applied to an apparatus (for example, a chip, or a chip system, or a circuit) in the network device, or an apparatus that can be used together with the network device. The following uses an example in which the method is applied to the network device for description. The method may include: The network device determines a time domain resource position for downlink transmission and a time domain resource position for uplink reception; and preferentially completes transmission of a downlink signal when the time domain resource position for downlink transmission overlaps the time domain resource position for uplink reception.

In the solution provided in this embodiment, when uplink and downlink timings overlap, the network device may preferentially complete transmission of a downlink signal, so that the terminal device can be enabled to perform transmission when uplink and downlink timings overlap, thereby improving a capacity of a network system.

It should be understood that the second aspect may be performed by the network device. Specific content of the second aspect corresponds to content of the first aspect. For a corresponding feature of the second aspect and achieved beneficial effects, refer to the descriptions of the first aspect. To avoid repetition, detailed descriptions are appropriately omitted herein.

In a possible implementation, a start time of the time domain resource position for uplink reception is earlier than an end time of the time domain resource position for downlink transmission, or an end time of the time domain resource position for uplink reception is later than a start time of the time domain resource position for downlink transmission.

In a possible implementation, the method further includes: determining whether to perform uplink reception processing on the first time domain resource. The first time domain resource is a remaining time domain resource in a time domain resource for uplink reception other than a time domain resource that overlaps a time domain resource for downlink transmission.

In a possible implementation, determining whether to perform the uplink reception processing on the first time domain resource includes: determining, based on the first time domain resource and the first threshold, whether to perform the uplink reception processing on the first time domain resource.

In a possible implementation, the first threshold is a time domain resource length, and determining, based on the first time domain resource and the first threshold, whether to perform the uplink reception processing on the first time domain resource includes: if the first time domain resource is less than or equal to the first threshold, discarding the uplink reception processing on the first time domain resource; or if the first time domain resource is greater than the first threshold, performing the uplink reception processing on the first time domain resource.

In a possible implementation, the first threshold is a proportion, and determining, based on the first time domain resource and the first threshold, whether to perform the uplink reception processing on the first time domain resource includes: if a proportion of the first time domain resource in the time domain resource for uplink reception is less than or equal to the first threshold, discarding the uplink reception processing on the first time domain resource; or if a proportion of the first time domain resource in the time domain resource for uplink reception is greater than the first threshold, performing the uplink reception processing on the first time domain resource.

In a possible implementation, the first threshold is predefined in a protocol.

In a possible implementation, the method further includes: configuring the first threshold for the terminal device.

In a possible implementation, determining whether to perform the uplink reception processing on the first time domain resource includes: if the first time domain resource includes N or more time domain resources for transmitting a DMRS, performing the uplink reception processing on the first time domain resource, where N is an integer greater than 0; or if the first time domain resource includes less than N time domain resources for transmitting a DMRS, discarding the uplink reception processing on the first time domain resource.

In a possible implementation, performing the uplink reception processing on the first time domain resource includes: performing uplink reception processing on data corresponding to the first time domain resource on the first time domain resource; or shifting reception processing of data corresponding to the time domain resource for uplink reception to start from the first time domain resource.

In a possible implementation, the time domain resource for downlink transmission or the time domain resource for uplink reception includes a TTI, and the TTI includes one or more subframes, one or more slots, or one or more mini-slots.

In a possible implementation, the method further includes: transmitting a signal to the terminal device, where the signal is used by the terminal device to determine a downlink system frame timing; and transmitting a second TA value to the terminal device.

According to a third aspect, this application provides a communication method. The method may be applied to a terminal device, or may be applied to an apparatus (for example, a chip, or a chip system, or a circuit) in the terminal device, or an apparatus that can be used together with the terminal device. The following uses an example in which the method is applied to the terminal device for description. For example, the terminal device in embodiments of this application may be a first-type terminal device. The first-type terminal device is a terminal device having a lower air-interface capability than an eMBB terminal. For example, the first-type terminal device is a RedCap/eRedCap terminal device. A duplex capability of the first-type terminal device is HD-FDD. The method may include: A terminal device determines a time domain resource position for downlink reception and a time domain resource position for uplink transmission; and preferentially completes transmission of an uplink signal when the time domain resource position for downlink reception overlaps the time domain resource position for uplink transmission.

In the solution provided in this embodiment, the terminal device may perform uplink transmission based on a TA. In an NTN scenario, a TA value of the terminal device is large. As a result, uplink and downlink timings of the terminal device may overlap. In this embodiment of this application, for a terminal device with an HD-FDD duplex capability, when uplink and downlink timings overlap, the terminal device may preferentially complete transmission of an uplink signal, so that the terminal device can be enabled to perform transmission when uplink and downlink timings overlap, thereby improving a capacity of a network system.

In a possible implementation, a start time of the time domain resource position for uplink transmission is earlier than an end time of the time domain resource position for downlink reception, or an end time of the time domain resource position for uplink transmission is later than a start time of the time domain resource position for downlink reception.

In a possible implementation, the method further includes: determining whether to perform downlink reception processing on a second time domain resource. The second time domain resource is a remaining time domain resource in a time domain resource for downlink reception other than a time domain resource that overlaps a time domain resource for uplink transmission.

In a possible implementation, determining whether to perform the downlink reception processing on the second time domain resource includes: determining, based on the second time domain resource and a second threshold, whether to perform the downlink reception processing on the second time domain resource.

In a possible implementation, the second threshold is a time domain resource length, and determining, based on the second time domain resource and the second threshold, whether to perform the downlink reception processing on the second time domain resource includes: if the second time domain resource is less than or equal to the second threshold, discarding the downlink reception processing on the second time domain resource; or if the second time domain resource is greater than the second threshold, performing the downlink reception processing on the second time domain resource.

In a possible implementation, the second threshold is a proportion, and determining, based on the second time domain resource and the second threshold, whether to perform the downlink reception processing on the second time domain resource includes: if a proportion of the second time domain resource in the time domain resource for downlink reception is less than or equal to the second threshold, discarding the downlink reception processing on the second time domain resource; or if a proportion of the second time domain resource in the time domain resource for downlink reception is greater than the second threshold, performing the downlink reception processing on the second time domain resource.

In a possible implementation, the second threshold is predefined in a protocol, or the second threshold is configured by a network device for the terminal device.

In a possible implementation, determining whether to perform the downlink reception processing on the second time domain resource includes: if the second time domain resource includes M or more time domain resources for transmitting a DMRS, performing the downlink reception processing on the second time domain resource, where M is an integer greater than 0; or if the second time domain resource includes less than M time domain resources for transmitting a DMRS, discarding the downlink reception processing on the second time domain resource.

In a possible implementation, the time domain resource for downlink reception or the time domain resource for uplink transmission includes a TTI, and the TTI includes one or more subframes, one or more slots, or one or more mini-slots.

In a possible implementation, determining the time domain resource position for uplink transmission includes: receiving a signal from the network device; determining a downlink system frame timing of the terminal device based on the signal; determining a first TA value based on a position of the terminal device; receiving a second TA value from the network device; and determining the time domain resource position for uplink transmission based on the downlink system frame timing, the first TA value, and the second TA value.

According to a fourth aspect, this application provides a communication method. The method may be applied to a network device, or may be applied to an apparatus (for example, a chip, or a chip system, or a circuit) in the network device, or an apparatus that can be used together with the network device. The following uses an example in which the method is applied to the network device for description. The method may include: The network device determines a time domain resource position for downlink transmission and a time domain resource position for uplink reception; and preferentially completes reception of an uplink signal when the time domain resource position for downlink transmission overlaps the time domain resource position for uplink reception.

In the solution provided in this embodiment, when uplink and downlink timings overlap, the network device may preferentially complete reception of an uplink signal, so that the terminal device can be enabled to perform transmission when uplink and downlink timings overlap, thereby improving a capacity of a network system.

It should be understood that the second aspect may be performed by the network device. Specific content of the second aspect corresponds to content of the first aspect. For a corresponding feature of the second aspect and achieved beneficial effects, refer to the descriptions of the first aspect. To avoid repetition, detailed descriptions are appropriately omitted herein.

In a possible implementation, a start time of the time domain resource position for uplink reception is earlier than an end time of the time domain resource position for downlink reception, or an end time of the time domain resource position for uplink transmission is later than a start time of the time domain resource position for downlink reception.

In a possible implementation, the method further includes: determining whether to perform downlink transmission on the second time domain resource. The second time domain resource is a remaining time domain resource in a time domain resource for downlink transmission other than a time domain resource that overlaps a time domain resource for uplink reception.

In a possible implementation, determining whether to perform the downlink transmission on the second time domain resource includes: determining, based on the second time domain resource and a second threshold, whether to perform the downlink transmission on the second time domain resource.

In a possible implementation, the second threshold is a time domain resource length, and determining, based on the second time domain resource and the second threshold, whether to perform the downlink transmission on the second time domain resource includes: if the second time domain resource is less than or equal to the second threshold, discarding the downlink transmission on the second time domain resource; or if the second time domain resource is greater than the second threshold, performing the downlink transmission on the second time domain resource.

In a possible implementation, the second threshold is a proportion, and determining, based on the second time domain resource and the second threshold, whether to perform the downlink transmission on the second time domain resource includes: if a proportion of the second time domain resource in the time domain resource for downlink reception is less than or equal to the second threshold, discarding the downlink transmission on the second time domain resource; or if a proportion of the second time domain resource in the time domain resource for downlink reception is greater than the second threshold, performing the downlink transmission on the second time domain resource.

In a possible implementation, the second threshold is predefined in a protocol.

In a possible implementation, the method further includes: configuring the second threshold for the terminal device.

In a possible implementation, determining whether to perform the downlink transmission on the second time domain resource includes: if the second time domain resource includes M or more time domain resources for transmitting a DMRS, performing the downlink transmission on the second time domain resource, where M is an integer greater than 0; or if the second time domain resource includes less than M time domain resources for transmitting a DMRS, discarding the downlink transmission on the second time domain resource.

In a possible implementation, performing the downlink transmission on the second time domain resource includes: performing downlink transmission on data corresponding to the second time domain resource on the second time domain resource; or shifting transmission of data corresponding to the time domain resource for downlink transmission to start from the second time domain resource.

In a possible implementation, the time domain resource for downlink transmission or the time domain resource for uplink reception includes a TTI, and the TTI includes one or more subframes, one or more slots, or one or more mini-slots.

In a possible implementation, the method further includes: transmitting a signal to the terminal device, where the signal is used by the terminal device to determine a downlink system frame timing; and transmitting a second TA value to the terminal device.

According to a fifth aspect, this application provides a communication apparatus. The communication apparatus includes modules/units configured to perform the method according to any one of the first aspect, the possible implementations of the first aspect, the third aspect, or the possible implementations of the third aspect. The apparatus may be a terminal device, or may be a module (for example, a chip, a chip system, or a processor) used in the terminal device, or may be a logical node, a logical module, or software that can implement all or some functions of the terminal device.

According to a sixth aspect, this application provides a communication apparatus. The communication apparatus includes modules/units configured to perform the method according to any one of the second aspect, the possible implementations of the second aspect, the fourth aspect, or the possible implementations of the fourth aspect. The apparatus may be a network device, or may be a module (for example, a chip, a chip system, or a processor) used in the network device, or may be a logical node, a logical module, or software that can implement all or some functions of the network device.

According to a seventh aspect, an embodiment of this application provides a communication apparatus. The communication apparatus may be a terminal device, or may be an apparatus (for example, a chip, or a chip system, or a circuit) in the terminal device. The communication apparatus may include a processor. The processor is coupled to a memory. The memory is configured to store a program or instructions. When the program or the instructions are executed by the processor, the communication apparatus is enabled to perform the method performed by the terminal device or the apparatus in the terminal device in the foregoing method embodiments.

According to an eighth aspect, an embodiment of this application provides a communication apparatus. The communication apparatus may be a network device, or may be an apparatus (for example, a chip, or a chip system, or a circuit) in the network device. The communication apparatus may include a processor. The processor is coupled to a memory. The memory is configured to store a program or instructions. When the program or the instructions are executed by the processor, the communication apparatus performs the method performed by the network device or the apparatus in the network device in the foregoing method embodiments.

According to a ninth aspect, an embodiment of this application provides a computer-readable storage medium. The computer-readable storage medium stores a computer program or computer instructions, and when the computer program or the computer instructions are run on a computer, the computer is enabled to perform the method in the first aspect or any possible implementation of the first aspect, the second aspect or any possible implementation of the second aspect, the third aspect or any possible implementation of the third aspect, or the fourth aspect or any possible implementation of the fourth aspect.

According to a tenth aspect, an embodiment of this application provides a computer program product including program instructions. When the computer program product runs on a computer, the computer is enabled to perform the method in the first aspect or any possible implementation of the first aspect, the second aspect or any possible implementation of the second aspect, the third aspect or any possible implementation of the third aspect, or the fourth aspect or any possible implementation of the fourth aspect.

According to an eleventh aspect, an embodiment of this application provides a chip system. The chip system includes a processor, configured to implement functions in the foregoing methods. In a possible implementation, the chip system may further include a memory, configured to store program instructions and/or data. The chip system may include a chip, or may include a chip and another discrete component.

According to a twelfth aspect, an embodiment of this application provides a communication system. The communication system includes a terminal device and a network device. When the terminal device and the network device run in the communication system, the terminal device and the network device are configured to perform any method according to the first aspect to the fourth aspect.

### BRIEF DESCRIPTION OF DRAWINGS

To describe the technical solutions in embodiments of this application more clearly, the following briefly describes the accompanying drawings for describing embodiments.
FIG. 1 is a diagram of a network architecture of a mobile communication system according to an embodiment of this application;
FIG. 2 is a diagram of a relationship between uplink and downlink timings of data according to an embodiment of this application;
FIG. 3 is a schematic flowchart of a communication method according to an embodiment of this application;
FIG. 4 is a diagram of overlap between uplink and downlink timings according to an embodiment of this application;
FIG. 5 is another diagram of overlap between uplink and downlink timings according to an embodiment of this application;
FIG. 6 is still another diagram of overlap between uplink and downlink timings according to an embodiment of this application;
FIG. 7 is still another diagram of overlap between uplink and downlink timings according to an embodiment of this application;
FIG. 8 is a schematic flowchart of another communication method according to an embodiment of this application;
FIG. 9 is still another diagram of overlap between uplink and downlink timings according to an embodiment of this application;
FIG. 10 is still another diagram of overlap between uplink and downlink timings according to an embodiment of this application; and
FIG. 11 and FIG. 12 are diagrams of possible structures of communication apparatuses according to embodiments of this application.

### DESCRIPTION OF EMBODIMENTS

The following further describes specific embodiments of this application in detail with reference to accompanying drawings.

In the specification, the claims, and the accompanying drawings of this application, the terms "first", "second", and the like are intended to distinguish between different objects but do not indicate a particular order. In addition, the terms "include", "have", and any variant thereof are intended to cover a non-exclusive inclusion. For example, a process, method, system, product, or device that includes a series of steps or units is not limited to the listed steps or units, but optionally further includes an unlisted step or unit, or optionally further includes another step or unit inherent to the process, method, product, or device.

An "embodiment" mentioned in this specification means that a particular feature, structure, or characteristic described with reference to this embodiment may be included in at least one embodiment of this application. A phrase shown at various locations in this specification may not necessarily refer to a same embodiment, nor an independent or optional embodiment exclusive from another embodiment. It is explicitly and implicitly understood by a person skilled in the art that embodiments described in the specification may be combined with another embodiment.

In this application, "at least one" means one or more, "a plurality of" means two or more, "at least two" means two or three or more, and "and/or" is used to describe an association relationship between associated objects and indicates that three relationships may exist. For example, "A and/or B" may indicate the following three cases: Only A exists, only B exists, and both A and B exist. A and B may be singular or plural. The character "/" generally indicates an "or" relationship between the associated objects. "At least one of the following" or a similar expression thereof indicates any combination of these items, including a single item or any combination of a plurality of items. For example, at least one of a, b, or c may represent a, b, c, "a and b", "a and c", "b and c", or "a, b, and c", where a, b, and c may be singular or plural.

In this application, "sending information to ... (for example, a terminal device)" may be understood as that a destination end of the information is the terminal device, and may include directly or indirectly sending the information to the terminal device. "Receiving information from ... (for example, a terminal device)" or "receiving information from ... (for example, a terminal device)" may be understood as that a source end of the information is the terminal device, and may include directly or indirectly receiving the information from the terminal device. Information may undergo necessary processing, for example, a format change, between a source end for sending the information and a destination end. However, the destination end may understand valid information from the source end. A similar expression in this application may be understood similarly, and details are not described herein again.

To better understand embodiments of this application, the following first describes a system architecture in embodiments of this application.

Embodiments of this application may be applied to a wireless communication system, such as a long term evolution (long term evolution, LTE) system, a 5th generation mobile communication (5th generation mobile communication, 5G) system, or a post-5G evolved communication system such as a 6th generation mobile communication (6th generation mobile communication, 6G) system, a satellite communication system, and a short-range communication system. The wireless communication system mentioned in embodiments of this application includes but is not limited to: three application scenarios of a 5G/6G mobile communication system, namely, enhanced mobile broadband (enhanced mobile broadband, eMBB), ultra-reliable low-latency communication (ultra reliable low latency communication, URLLC), and massive machine type communication (massive machine type of communication, mMTC); a remote internet of things (long range, LoRa) system; or an internet of vehicles system. The wireless communication system may include one or more network devices and one or more terminal devices.

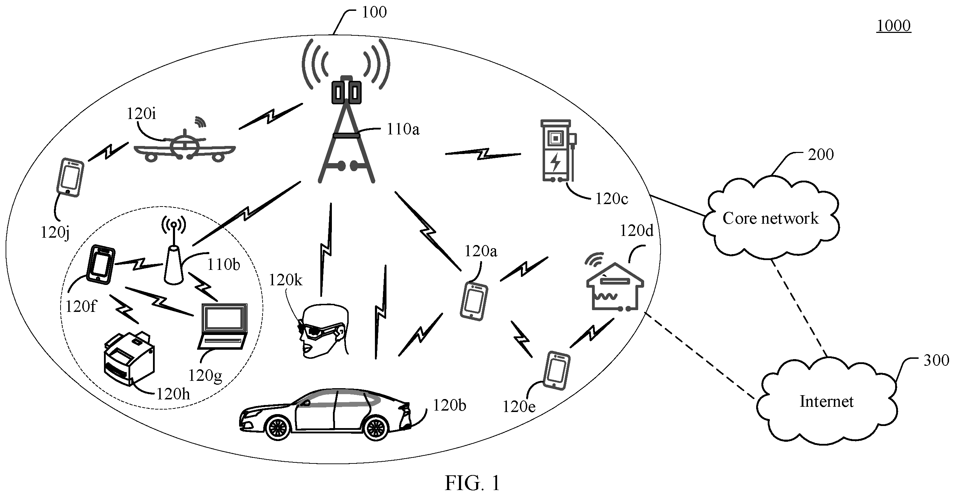

The following uses a system architecture shown in FIG. 1 as an example for description. As shown in FIG. 1, a communication system 1000 includes a radio access network (radio access network, RAN) 100, a core network (core network, CN) 200, and an internet 300. The RAN 100 includes at least one network device (110a and 110b in FIG. 1, collectively referred to as 110) and at least one terminal device (120a to 120k in FIG. 1, collectively referred to as 120). The RAN 100 may further include another RAN node, for example, a wireless relay device and/or a wireless backhaul device (not shown in FIG. 1). The terminal device 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device integrating a logical function of the core network and a logical function of the radio access network.

It should be noted that the RAN 100 may be a 3rd generation partnership project (3rd generation partnership project, 3GPP)-related cellular system, for example, a 4G/5G mobile communication system, or an evolved system after 5G (for example, a 6G mobile communication system). The RAN 100 may alternatively be an open access network (open RAN, O-RAN or ORAN), a cloud radio access network (cloud radio access network, CRAN), or the like. The RAN 100 may alternatively be a communication system that integrates two or more of the foregoing systems. It should be noted that a quantity of network devices and terminal devices in FIG. 1 is merely an example, and should not be considered as a specific limitation on this application. The following further describes in detail the terminal device and the network device in the system architecture.

### 1. Terminal device

The terminal device may also be referred to as user equipment (user equipment, UE), a mobile station (mobile station, MS), a mobile terminal device (mobile terminal, MT), or the like, or is a device configured to provide voice or data connectivity for a user, or may be an internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, or a pedometer), an in-vehicle device (for example, an automobile, a bicycle, an electric vehicle, an airplane, a ship, a train, or a high-speed train), a satellite terminal device, a virtual reality (virtual reality, VR) device, an augmented reality (augmented reality, AR) device, a smart point of sale (point of sale, POS) machine, customer-premises equipment (customer-premises equipment, CPE), a wireless terminal device in industrial control, a smart home device (for example, a refrigerator, a television, an air conditioner, or an electricity meter), a smart robot, a robot arm, a workshop device, a wireless terminal device in self driving, a wireless terminal device in telemedicine, a wireless terminal device in a smart grid (smart grid), a wireless terminal device in transportation safety, a wireless terminal device in a smart city, a wireless terminal device in a smart home, a flight device (for example, a smart robot, a hot air balloon, an uncrewed aerial vehicle, or an airplane), or the like. The terminal device may alternatively be another device having a terminal device function. For example, the terminal device may alternatively be a device that functions as a terminal device in D2D communication.

A device form of the terminal device is not limited in embodiments of this application. An apparatus configured to implement functions of the terminal device may be a terminal device, or may be an apparatus, for example, a chip system, that can support the terminal device in implementing the function. The apparatus may be mounted in the terminal device or used in combination with the terminal device. In embodiments of this application, the chip system may include a chip, or may include a chip and another discrete component.

It should be noted that the terminal device in embodiments of this application may be a first-type terminal device, and the first-type terminal device is a terminal device having a low air-interface capability. In an example, the terminal device may be a terminal device having a lower air-interface capability than an eMBB terminal, where the eMBB terminal may be, for example, a smartphone.

For example, the air-interface capability may include a physical-layer capability and a higher-layer capability, and the first-type terminal device having a low air-interface capability may include: The first-type terminal device has a low physical-layer capability, and/or has a low higher-layer capability. The first-type terminal device has a low physical-layer capability, which, for example, may be understood as follows: The first-type terminal device supports a small bandwidth, a low modulation order, a small quantity of antennas, or few multiple-input multiple-output system (multi-inputmulti-output, MIMO) layers, or a duplex mode is a half-duplex (HD-FDD) mode. For example, the first-type terminal device supports a maximum bandwidth of 20 M and/or supports a maximum of two receive antennas.

In an example, the first-type terminal device may be a RedCap/eRedCap terminal device. The RedCap terminal device, for example, includes an industrial wireless sensor (industrialwirelesssensors), a video surveillance (videosurveillance) device, a wearable (wearables) device, or a device (for example, a smart water meter, a smart electricity meter) in an internet of things (internetofthings, IoT). It should be noted that the first-type terminal device may alternatively have another name, which is not limited in embodiments of this application.

### 2. Network device

The network device is a node in a radio access network (radio access network, RAN), and may also be referred to as a network device, or may also be referred to as a RAN node (or device). The network device is configured to assist the terminal device in implementing wireless access. The plurality of network devices 110 in the communication system 1000 may be nodes of a same type, or may be nodes of different types. In some scenarios, roles of the network device 110 and the terminal device 120 are relative. For example, a network element 120i in FIG. 1 may be a helicopter or an uncrewed aerial vehicle, which may be configured as a mobile base station. For terminal devices 120j that access the RAN 100 by using the network element 120i, the network element 120i is a base station. However, for a base station 110a, the network element 120i is a terminal device. Both the network device 110 and the terminal device 120 are sometimes referred to as communication apparatus. For example, base stations 110a and 110b in FIG. 1 may be understood as communication apparatuses having a function of a base station, and network elements 120a to 120k may be understood as communication apparatuses having a function of a terminal device.

In a possible scenario, the network device may be a base station (base station), an evolved NodeB (evolved NodeB, eNodeB), a transmission reception point (transmitting and receiving point, TRP), a transmission point (transmitting point, TP), a next-generation NodeB (next-generation NodeB, gNB), a next-generation base station in a 6th generation (6th generation, 6G) mobile communication system, a base station in a future mobile communication system, a satellite, an integrated access and backhaul (integrated access and backhaul, IAB) node, or a network device that is in a non-terrestrial communication network (non-terrestrial network, NTN) communication system of a mobile switching center, that is, may be deployed on a high-altitude platform station, a satellite, or the like. The network device may be a macro base station (110a in FIG. 1), a micro base station or an indoor base station (110b in FIG. 1), a relay node or a donor node, or a radio controller in a CRAN scenario. Alternatively, the network device may be a device that functions as a base station in device-to-device (device-to-device, D2D) communication, internet of vehicles communication, uncrewed aerial vehicle communication, or machine-to-machine communication. Optionally, the network device may alternatively be a server, a wearable device, a vehicle, an in-vehicle device, or the like. For example, a network device in a vehicle-to-everything (vehicle to everything, V2X) technology may be a road side unit (road side unit, RSU).

All or some of functions of the network device in this application may alternatively be implemented by using a software function running on hardware, or may be implemented by using a virtualization function instantiated on a platform (for example, a cloud platform). The network device in this application may alternatively be a logical node, a logical module, or software that can implement all or some of functions of the network device.

In another possible scenario, a plurality of network devices collaborate to assist the terminal device in implementing radio access, and different network devices respectively implement some functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or CU-CP and CU-UP), the DU, or the RU may alternatively have different names, but a person skilled in the art may understand meanings of these names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP or the CU-UP), the DU, and the RU in this application may be implemented by using a software module, a hardware module, or a combination of the software module and the hardware module.

A form of the network device is not limited in embodiments of this application. An apparatus for implementing a function of the network device may be a network device, or may be an apparatus, for example, a chip system, that can support the network device in implementing the function. The apparatus may be mounted in the network device or used in combination with the network device.

The following first describes technical terms that may appear in embodiments of this application. Terms used in implementations of this application are merely intended to explain specific embodiments of this application, instead of limiting this application. It should be understood that definitions of the following technical terms are merely examples. For example, as technology continues to evolve, the scope of the foregoing definitions may also change, and embodiments of this application are not limited thereto.

### (1) NTN scenario

Because conventional terrestrial networks cannot provide seamless coverage, especially in places such as oceans, deserts, or airspace in which base stations cannot be deployed, satellite communication is considered to be an important aspect of future development of wireless communication technologies. Satellite communication is communication in which a radio communication device on the ground performs communication by using a satellite as a relay. A satellite communication system includes a satellite segment and a ground segment. Satellite communication features wide communication coverage; an ability to establish communication between any two points within a coverage area of a radio wave transmitted by a satellite; and low susceptibility to terrestrial disasters (high reliability). As a complement to current terrestrial cellular communication systems, satellite communication can have the following advantages:

Extended coverage: For areas that cannot be covered by current cellular communication systems or where coverage costs are high, such as oceans, deserts, or remote mountainous regions, satellite communication can be used to resolve the communication problem.

Emergency communication: In an extreme situation, such as an earthquake, in which cellular communication infrastructure is unavailable, satellite communication can quickly establish a communication connection.

Providing industry applications: For example, for a delay-sensitive service transmitted over a long distance, satellite communication can be used to reduce a delay of service transmission.

NTN satellites have a wide coverage area. Considering larger cell coverage, longer round-trip time (RTT), and high-speed movement of an NGSO satellite, 3GPP has enhanced an uplink synchronization mechanism in an NR protocol.

### (2) Timing advance (Timing Advance, TA)

TA is usually used for uplink transmission of a terminal device, and refers to a time in advance of a frame for sending uplink data by the terminal device relative to a downlink system frame. To synchronize time at which a receiving side, for example, a network device side, receives uplink signals from different terminal devices, a TA mechanism is used in a long term evolution (Long Term Evolution, LTE) technology. The terminal device may perform uplink transmission by using a TA. TA refers to a specific time in advance of a system frame for sending uplink data by the terminal device relative to a corresponding downlink system frame. A reason for performing timing advance is that if timing advance is not performed, after the terminal device receives downlink information sent by a network device and then sends uplink information, the uplink information arrives at the network device with a time difference relative to a sending moment, which is caused by a total time required for uplink and downlink transmission. Because different terminal devices are at different distances from the network device, time differences for different terminal devices are also different. As a result, uplink information sent by different terminal devices arrives at the network device at different moments, causing interference. Therefore, the network device expects signals from different terminal devices within a same subframe to arrive at the network device in an essentially aligned manner. As long as the time difference falls within a cyclic prefix (cyclicprefix, CP) range, the network device can correctly receive the uplink data sent by the terminal device. Therefore, timing advance is required.

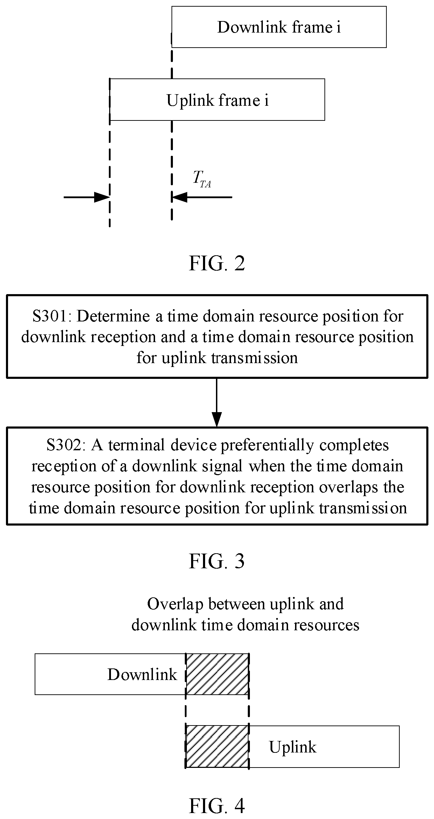

FIG. 2 is a diagram of a structure of uplink data transmission according to an embodiment of this application. Details are shown in FIG. 2.

The terminal device may determine a TA value according to the following formula: ${T}_{TA} = \left({N}_{TA}+{N}_{TA - offset}+{N}_{TA , adj}^{common}+{N}_{TA , adj}^{UE}\right) ⋅ {T}_{C}$

*T_{TA}* represents a TA value, and *N_{TA}* represents a delay amount of signal transmission caused by a physical distance between the terminal device and the network device. After the terminal device receives a downlink signal from the network device and then sends an uplink signal, the uplink signal arrives at the network device with a time difference relative to a sending moment, and *N_{TA}* is determined by a total time required for uplink and downlink transmission. Because different terminal devices are at different distances from the network device, time differences for different terminal devices are also different. As a result, timing advances of signal transmission delays caused by corresponding physical distances between different terminal devices and the network device are also different. The network device may determine the *N_{TA}* value by measuring the uplink signal from the terminal device, and send the *N_{TA}* value to the terminal device. The uplink signal may be, for example, any one of the following: a channel sounding reference signal (Sounding Reference Signal, SRS), a DMRS, a channel quality indicator (Channel Quality Indication, CQI), an acknowledgment (Acknowledgement, ACK) message, a negative acknowledgment (Nacknowledgement, NACK) message, a physical uplink shared channel (Physical Uplink Shared Channel, PUSCH), and the like. *N_{TA-offset}* indicates a timing advance offset, that is, a time offset of an uplink window on a network device side relative to a downlink window, and is used to ensure that a network device in a time division duplex (time division duplex, TDD) mode has sufficient time to complete switching from uplink reception to downlink transmission on a same frequency. The uplink window on the network device side may be understood as a time window used by the network device to receive an uplink signal, and the downlink window on the network device side may be understood as a time window used by the network device to send a downlink signal. During a period in which the network device sends downlink data and during a period in which the network device receives uplink data, a switching time is required for turning an analog component on and off. Therefore, there is a corresponding receive/transmit switching delay. Usually, the *N*_{*TA*-*offset*} value may be broadcast by the network device to the terminal device by using a system information block 1 (System Information Block1, SIB1) or a synchronization signal and physical broadcast channel block (Synchronization Signal and Physical Broadcast Channel block, SSB). In addition, the *N_{TA-offset}* value may alternatively be a value predefined in a protocol.

In the foregoing formula, *T_{C} =* 1/(Δ*fₘₐₓ* · *N_{f}*), Δ*fₘₐₓ* = 480 · 10³Hertz (hertz, Hz), and *N_{f}* = 4096 . It may be understood that *T_{C}* is used for time-unit conversion, and Δ*fₘₐₓ* and *N_{f}* are parameters defined in an existing NR protocol for calculating *T_{C}.*

*N_{TA}* and *N_{TA-offset}* may be provided in Clause 4.2 of [5, TS 38.213], with an exception of msgA transmission on the PUSCH, for which *N_{TA} =* 0 is used. ${N}_{TA , adj}^{common}$ may be provided by higher-layer parameters ta-Common, ta-CommonDrift, and ta-CommonDriftVariant (if configured) in Clause 4.2 of [5, TS 38.213]. Otherwise, ${N}_{TA , adj}^{common} = 0$*.* ${N}_{TA , adj}^{UE}$ may be calculated by UE based on a UE location and higher-layer parameters related to a serving satellite ephemeris (if configured) in Clause 4.2 of [5, TS 38.213]. Otherwise, ${N}_{TA , adj}^{UE} = 0$. For details, refer to Section 4.3.1 of 38.211 v18.1.0.

A terminal device that cannot perform full-duplex communication is not expected to transmit on an uplink before *N_{RX-TX}T_{C}* after an end of a last downlink symbol received in a same cell, where *N_{RX-TX}* is given in Table 1.

A terminal device that cannot perform full-duplex communication is not expected to perform reception before *N_{TX-RX}T_{C}* after an end of a last uplink symbol transmitted in a same cell, where *N_{TX-RX}* is given in Table 1.

**Table 1 Transition times N_{RX-TX} and N_{TX-RX}**

| Transition Time | FR1 | FR2 |
|---|---|---|
| *N_{TX-RX}* | 25600 | 13792 |
| *N_{RX-TX}* | 25600 | 13792 |

### (3) First-type terminal device

The first-type terminal device is a terminal device having a low air-interface capability. In an example, the terminal device may be a terminal device having a lower air-interface capability than an eMBB terminal, where the eMBB terminal may be, for example, a smartphone.

For example, the air-interface capability may include a physical-layer capability and a higher-layer capability, and the first-type terminal device having a low air-interface capability may include: The first-type terminal device has a low physical-layer capability, and/or has a low higher-layer capability. The first-type terminal device has a low physical-layer capability, which, for example, may be understood as follows: The first-type terminal device supports a small bandwidth, a low modulation order, a small quantity of antennas, or few multiple-input multiple-output system (multi-inputmulti-output, MIMO) layers, or a duplex mode is a half-duplex (HD-FDD) mode. For example, the first-type terminal device supports a maximum bandwidth of 20 M and/or supports a maximum of two receive antennas.

In an example, the first-type terminal device may be a RedCap/eRedCap terminal device. The RedCap terminal device, for example, includes an industrial wireless sensor (industrialwirelesssensors), a video surveillance (videosurveillance) device, a wearable (wearables) device, or a device (for example, a smart water meter, a smart electricity meter) in an internet of things (internetofthings, IoT). It should be noted that the first-type terminal device may alternatively have another name, which is not limited in embodiments of this application.

First, to facilitate understanding of embodiments of this application, a technical problem to be specifically resolved in this application is further analyzed and proposed.

An NTN, such as satellite communication, has advantages such as wide coverage, long communication distance, high reliability, high flexibility, and high throughput. Being immune to geographical environments, climatic conditions, and natural disasters, the NTN has been widely used in fields such as aeronautical communication, maritime communication, and military communication. Introducing satellites into a 5G NR technology can provide communication services for areas that can hardly be covered by a terrestrial network, such as oceans and forests, and can enhance reliability of 5G communication. For example, more stable and higher-quality communication services can be provided for trains, planes, and users on board, and more data transmission resources can also be provided to support a larger quantity of connections.

With evolution of a 5G NR system, a RedCap terminal device is introduced. The RedCap terminal device has a lower air-interface capability, for example, supporting a smaller bandwidth and a lower modulation order, and having fewer antennas.

For the RedCap/eRedCap terminal device, a duplex capability of the RedCap/eRedCap terminal device is usually half-duplex frequency division duplex (HD-FDD). In an NTN scenario, a coverage area of NTN communication is very wide. Considering larger cell coverage, longer round-trip time (RTT), and high-speed movement of an NGSO satellite, a TA value of an HD-FDD terminal device may fluctuate greatly, leading to overlap between uplink and downlink timings. How the HD-FDD terminal device performs transmission when uplink and downlink timings overlap is an urgent problem to be resolved.

This application provides a plurality of communication methods, which are respectively described in the following embodiments. Some of these communication methods are applicable only to specific procedures, while some may be applied to any one or more procedures. It should be understood that these communication methods may be used in combination with each other.

It should be understood that the communication method may change with evolution of the technical solutions, and the technical solutions provided in this application are not limited to the processes described below. Further, the descriptions of the scenarios in embodiments of this application are merely examples. The solutions in embodiments of this application are not limited to being applicable only to the described scenarios, and are also applicable to a scenario in which a similar problem exists.

This application provides a communication method, so that the terminal device may be enabled to perform transmission when uplink and downlink timings overlap, thereby improving a capacity of a network system. The following further describes the communication method and the communication apparatus with reference to the accompanying drawings.

It may be understood that this application is illustrated by using an example in which the network device and the terminal device are used as execution bodies of the interaction illustration. However, this application does not limit the execution bodies of the interaction illustration. For example, the network device in the method provided in this application may alternatively be a chip, a chip system, or a processor applied to the network device, or may alternatively be a logical node, a logical module, or software that can implement all or some of the network devices. The terminal device in the method provided in this application may alternatively be a chip, a chip system, or a processor applied to the terminal device, or may be a logical node, a logical module, or software that can implement all or some functions of the terminal device.

FIG. 3 is a schematic flowchart of the communication method according to an embodiment of this application. Specifically:
S301: Determine a time domain resource position for downlink reception and a time domain resource position for uplink transmission.

A time domain resource is, for example, but is not limited to, one or more orthogonal frequency division multiplexing (orthogonal frequency division multiplexing, OFDM) symbols. For example, a time domain resource occupied by a reference signal (referencesignal, RS) may be indicated by a start symbol (or a start position) and a quantity of symbols configured by the network device. The symbol includes an uplink symbol and a downlink symbol. The uplink symbol may be referred to as a single carrier frequency division multiple access (single carrier-frequency division multiple access, SC-FDMA) symbol or an orthogonal frequency division multiple access (orthogonal frequency division multiplexing, OFDM) symbol. The downlink symbol may be an OFDM symbol.

The time domain resource for downlink reception and/or the time domain resource for uplink transmission may include a TTI, and the TTI is one or more subframes, one or more slots, or one or more mini-slots.

It may be understood that the TTI is duration of one transmission. For example, one downlink reception and/or one uplink transmission by the terminal device may each constitute one TTI. The TTI may be at a granularity of a subframe. For example, one TTI includes one or more subframes. Alternatively, the TTI may be at a granularity of a slot. For example, one TTI includes one or more slots. Alternatively, the TTI may be at a granularity of a mini-slot. For example, one TTI includes one or more mini-slots. Alternatively, the TTI may be at a granularity of a symbol. For example, one TTI includes one or more symbols.

Alternatively, it may be understood that the time domain resource for downlink reception and/or the time domain resource for uplink transmission may be at a granularity of a subframe, for example, including one or more subframes; or may be a granularity of a slot, for example, including one or more slots; or may be a granularity of a mini-slot, for example, including one or more mini-slots; or may be a granularity of a symbol, for example, including one or more symbols.

Both the terminal device and the network device may determine a time domain resource position for downlink reception and a time domain resource position for uplink transmission. Details are as follows:
In a possible implementation, the network device may configure, for the terminal device, the time domain resource position for downlink reception and the time domain resource position for uplink transmission. For example, the time domain resource position may be semi-statically configured by the network device through radio resource control (radio resource control, RRC) signaling, or may be indicated by indication information such as downlink control information (downlink control information, DCI), or may be indicated through RRC signaling, medium access control control element (medium access control control element, MAC CE) signaling, or the like.

In another possible implementation, the network device may configure, for the terminal device, the time domain resource position for downlink reception. A manner of determining the time domain resource position for uplink transmission may be as follows: The terminal device receives a signal from the network device; determines a downlink system frame timing of the terminal device based on the signal; determines a first TA value based on a position of the terminal device; receives a second TA value from the network device; and determines the time domain resource position for uplink transmission based on the downlink system frame timing, the first TA value, and the second TA value.

S302: The terminal device preferentially completes reception of a downlink signal when the time domain resource position for downlink reception overlaps the time domain resource position for uplink transmission.

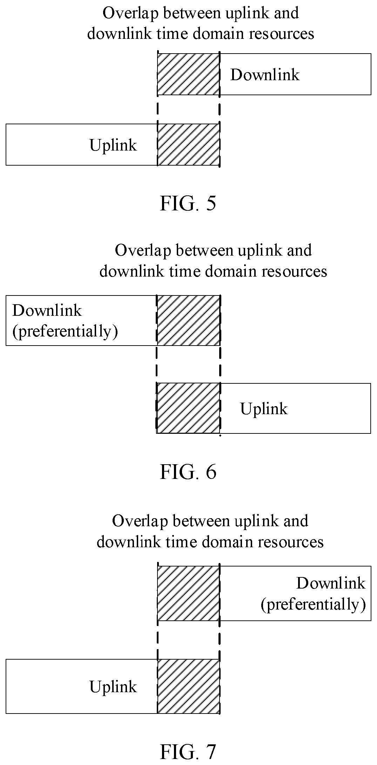

When the time domain resource position for downlink reception overlaps the time domain resource position for uplink transmission, two possible forms may occur. FIG. 4 is a diagram of overlap between uplink and downlink timings according to an embodiment of this application. As shown in FIG. 4, the terminal device switches from downlink reception to uplink transmission, and a system frame for sending uplink data by the terminal device is advanced relative to a corresponding downlink system frame due to the TA, which may be that a start time of the time domain resource position for uplink transmission may be earlier than an end time of the time domain resource position for downlink reception. Therefore, uplink and downlink time domain resources overlap. Alternatively, FIG. 5 is another diagram of overlap between uplink and downlink timings according to an embodiment of this application. As shown in FIG. 5, the terminal device switches from uplink transmission to downlink reception, and uplink transmission has not yet ended when a time for downlink reception arrives. In other words, an end time of the time domain resource position for uplink transmission is later than a start time of the time domain resource position for downlink reception. Therefore, uplink and downlink time domain resources overlap. The terminal device preferentially completes reception of the downlink signal, which may be either of the following cases:

In a first case, refer to FIG. 6. FIG. 6 is still another diagram of overlap between uplink and downlink timings according to an embodiment of this application. As shown in FIG. 6, the time domain resource position for downlink reception overlaps the time domain resource position for uplink transmission. Corresponding to a case shown in FIG. 4 in which a start time of the time domain resource position for uplink transmission is earlier than an end time of the time domain resource position for downlink reception, the terminal device preferentially completes reception of the downlink signal. It may be understood that, when uplink and downlink time domain resource positions overlap, the terminal device may discard transmission of an uplink signal, and continue to receive a downlink signal. After downlink reception corresponding to the time domain resource for downlink reception ends, the terminal device may switch from downlink reception to uplink transmission.

For the time domain resource for uplink transmission, a remaining time domain resource for uplink transmission other than a time domain resource that overlaps the time domain resource for downlink reception may be referred to as a first time domain resource. After switching from downlink reception to uplink transmission, the terminal device may determine whether to perform uplink transmission on the first time domain resource, which may be specifically any one or more of the following possible implementations:

In a possible implementation, the terminal device may determine, based on the first time domain resource and a first threshold, whether to perform the uplink transmission on the first time domain resource. For example, the first threshold may be a time domain resource length. If the first time domain resource is less than or equal to the first threshold, the terminal device may discard the uplink transmission on the first time domain resource. If the first time domain resource is greater than the first threshold, the terminal device may continue to perform the uplink transmission on the first time domain resource. For another example, the first threshold may be a proportion. If a proportion of the first time domain resource in the time domain resource for uplink transmission is less than or equal to the first threshold, the terminal device may discard the uplink transmission on the first time domain resource. If a proportion of the first time domain resource in the time domain resource for uplink transmission is greater than the first threshold, the terminal device may continue to perform the uplink transmission on the first time domain resource. The first threshold may be predefined in a protocol, or may be configured by the network device for the terminal device, for example, semi-statically configured by the network device through signaling, or indicated by DCI, RRC signaling, MAC CE signaling, or the like.

In another possible implementation, if the first time domain resource includes N or more time domain resources for transmitting a DMRS, the terminal device may continue to perform the uplink transmission on the first time domain resource, where N is an integer greater than 0. If the first time domain resource includes less than N time domain resources for transmitting the DMRS, the terminal device may discard the uplink transmission on the first time domain resource.

For the foregoing two possible implementations in which the terminal device continues to perform the uplink transmission on the first time domain resource, the terminal device may send data corresponding to the first time domain resource on the first time domain resource. In other words, only a portion of uplink data may be reported (transmission of uplink data corresponding to an originally overlapping part of uplink and downlink time domain resources is discarded). Because there are a large quantity of remaining time domain resources for uplink transmission (the first time domain resources) or the remaining time domain resources for uplink transmission (the first time domain resources) further include N or more time domain resources for transmitting the DMRS, reporting of the uplink data on the first time domain resource does not affect processing (for example, demodulation) performed by the network device on the uplink data. Therefore, the terminal device may continue to perform the uplink transmission. Alternatively, the terminal device may shift transmission of data corresponding to the time domain resource for uplink transmission to start from the first time domain resource. For example, the time domain resource for uplink transmission is a 1^{st} slot to a 10^{th} slot, where the 1^{st} slot to a 3^{rd} slot overlap a time domain resource for downlink reception. In this case, transmission of signals and/or data originally required to be transmitted in the 1^{st} slot to the 10^{th} slot may be shifted to start from a 4^{th} slot. That is, the 4^{th} slot to a 13^{th} slot are used to transmit signals and/or data originally required to be transmitted in the 1^{st} slot to the 10^{th} slot. In other words, reporting of all uplink data originally required to be reported may be shifted to start from the first time domain resource, so that the network device can properly process the uplink data.

Optionally, if the DMRS has been received on the first time domain resource, all signals and/or data received on the first time domain resource may be demodulated.

For the foregoing two possible implementations in which the terminal device discards the uplink transmission on the first time domain resource, it may be considered that, if there are few remaining time domain resources for uplink transmission (the first time domain resources) or the remaining time domain resources for uplink transmission (the first time domain resources) include less than N time domain resources for transmitting the DMRS, there is also a small amount of uplink data reported on the first time domain resource. In this case, the network device may be unable to properly process the uplink data, for example, resulting in demodulation errors or incomplete data. Therefore, the terminal device may not need to perform the uplink transmission on the first time domain resource, thereby reducing signaling overheads of the terminal device, saving network resources, and avoiding unnecessary waste of network resources.

It may be understood that the terminal device preferentially completes reception of a downlink signal when the time domain resource position for downlink reception overlaps the time domain resource position for uplink transmission. Correspondingly, the network device preferentially completes transmission of the downlink signal.

Further, the network device may determine whether to perform uplink reception processing on the first time domain resource, which may be specifically any one or more of the following possible implementations:

In a possible implementation, the network device may determine, based on the first time domain resource and the first threshold, whether to perform the uplink reception processing on the first time domain resource. For example, the first threshold is a time domain resource length. If the first time domain resource is less than or equal to the first threshold, the network device may discard the uplink reception processing on the first time domain resource. If the first time domain resource is greater than the first threshold, the network device may perform the uplink reception processing on the first time domain resource. For another example, the first threshold may be a proportion. If a proportion of the first time domain resource in the time domain resource for uplink transmission is less than or equal to the first threshold, the network device may discard the uplink reception processing on the first time domain resource. If a proportion of the first time domain resource in the time domain resource for uplink transmission is greater than the first threshold, the network device may perform the uplink reception processing on the first time domain resource. The first threshold may be predefined in a protocol.

In another possible implementation, if the first time domain resource includes N or more time domain resources for transmitting the DMRS, the network device may perform the uplink reception processing on the first time domain resource. If the first time domain resource includes less than N time domain resources for transmitting the DMRS, the terminal device may discard the uplink reception processing on the first time domain resource.

For the foregoing two possible implementations in which the network device performs the uplink reception processing on the first time domain resource, the network device may perform reception processing on data corresponding to the first time domain resource on the first time domain resource. In other words, the network device receives only a portion of uplink data reported by the terminal device (transmission of uplink data corresponding to an originally overlapping part of uplink and downlink time domain resources is discarded). Because there are a large quantity of remaining time domain resources for uplink transmission (the first time domain resources) or the remaining time domain resources for uplink transmission (the first time domain resources) further include N or more time domain resources for transmitting the DMRS, reception of the uplink data by the network device on the first time domain resource does not affect processing (for example, demodulation) of the uplink data. Therefore, the network device may perform reception processing on uplink data corresponding to the first time domain resource. Alternatively, the network device may shift reception processing of all data that corresponds to the time domain resource and that is sent by the terminal device to start from the first time domain resource, that is, may shift reception processing of all uplink data.

Optionally, if the DMRS has been received on the first time domain resource, all signals and/or data received on the first time domain resource may be demodulated.

For the foregoing two possible implementations in which the network device discards the uplink reception processing on the first time domain resource, it may be considered that, if there are few remaining time domain resources for uplink transmission (the first time domain resources) or the remaining time domain resources for uplink transmission (the first time domain resources) include less than N time domain resources for transmitting the DMRS, there is also a small amount of uplink data reported by the terminal device on the first time domain resource. In this case, the network device may be unable to properly process the uplink data, for example, resulting in demodulation errors or incomplete data. Therefore, the network device may not need to perform the uplink reception processing on the first time domain resource, thereby saving network resources and avoiding unnecessary waste of network resources.

In a second case, refer to FIG. 7. FIG. 7 is still another diagram of overlap between uplink and downlink timings according to an embodiment of this application. As shown in FIG. 7, the time domain resource position for downlink reception overlaps the time domain resource position for uplink transmission. Corresponding to a case shown in FIG. 5 in which an end time of the time domain resource position for uplink transmission is later than a start time of the time domain resource position for downlink reception, the terminal device preferentially completes reception of a downlink signal. It may be understood that, when uplink and downlink time domain resources overlap, the terminal device may discard transmission of an uplink signal, and switch to reception of a downlink signal.

It should be understood that in this embodiment, sequence numbers of the foregoing processes do not mean execution sequences. The execution sequences of the processes should be determined based on functions and internal logic of the processes, and should not be construed as any limitation on the implementation processes of embodiments of this application.

In the solution provided in this embodiment, for a terminal device with an HD-FDD duplex capability, when uplink and downlink timings overlap, the terminal device may preferentially complete reception of a downlink signal. For a network device, when uplink and downlink timings overlap, the network device may preferentially complete transmission of a downlink signal. The terminal device can be enabled to perform transmission when uplink and downlink timings overlap, thereby improving a capacity of a network system.

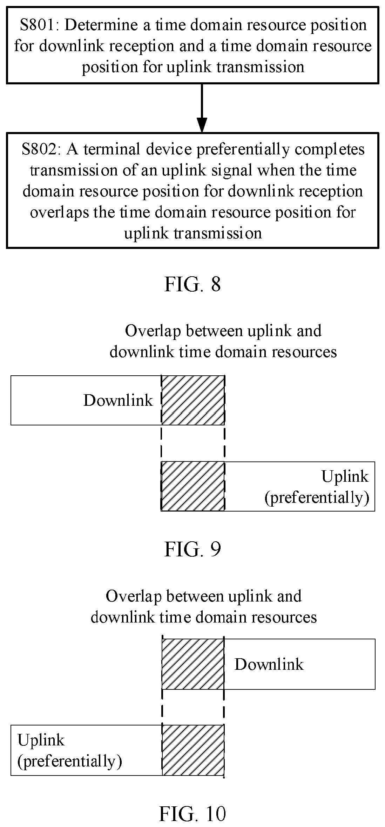

FIG. 8 is a schematic flowchart of another communication method according to an embodiment of this application. Specifically:
S801: Determine a time domain resource position for downlink reception and a time domain resource position for uplink transmission.

It may be understood that for S801, refer to specific descriptions of S301. Details are not described herein again.

S802: The terminal device preferentially completes transmission of an uplink signal when the time domain resource position for downlink reception overlaps the time domain resource position for uplink transmission.

For specific descriptions in which the time domain resource position for downlink reception overlaps the time domain resource position for uplink transmission, refer to S302. Details are not described herein again.

In addition, the terminal device preferentially completes transmission of the uplink signal, which may be either of the following cases:
In a first case, refer to FIG. 9. FIG. 9 is still another diagram of overlap between uplink and downlink timings according to an embodiment of this application. As shown in FIG. 9, the time domain resource position for downlink reception overlaps the time domain resource position for uplink transmission. Corresponding to a case shown in FIG. 4 in which a start time of the time domain resource position for uplink transmission is earlier than an end time of the time domain resource position for downlink reception, the terminal device preferentially completes transmission of the uplink signal. It may be understood that, when uplink and downlink time domain resources overlap, the terminal device may discard reception of a downlink signal, and switch to transmission of the uplink signal.

In a second case, refer to FIG. 10. FIG. 10 is still another diagram of overlap between uplink and downlink timings according to an embodiment of this application. As shown in FIG. 10, the time domain resource position for downlink reception overlaps the time domain resource position for uplink transmission. Corresponding to a case shown in FIG. 5 in which an end time of the time domain resource position for uplink transmission is later than a start time of the time domain resource position for downlink reception, the terminal device preferentially completes transmission of an uplink signal. It may be understood that, when uplink and downlink time domain resources overlap, the terminal device may discard transmission of an uplink signal, and switch to reception of a downlink signal.

For the time domain resource for downlink reception, a remaining time domain resource for downlink reception other than a time domain resource that overlaps the time domain resource for uplink transmission may be referred to as a second time domain resource. After switching from transmission of the uplink signal to reception of the downlink signal, the terminal device may determine whether to perform downlink reception processing on the second time domain resource, which may be specifically any one or more of the following possible implementations:
In a possible implementation, the terminal device may determine, based on the second time domain resource and a second threshold, whether to perform the downlink reception processing on the second time domain resource. For example, the second threshold may be a time domain resource length. If the second time domain resource is less than or equal to the second threshold, the terminal device may discard the downlink reception processing on the first time domain resource. If the second time domain resource is greater than the second threshold, the terminal device may perform the downlink reception processing on the second time domain resource. For another example, the second threshold may be a proportion. If a proportion of the second time domain resource in the time domain resource for downlink reception is less than or equal to the second threshold, the terminal device may discard downlink reception processing on the second time domain resource. If a proportion of the second time domain resource in the time domain resource for downlink reception is greater than the second threshold, the terminal device may perform the downlink reception processing on the second time domain resource. The second threshold may be predefined in a protocol, or may be configured by the network device for the terminal device, for example, semi-statically configured by the network device through signaling, or indicated by DCI, RRC signaling, MAC CE signaling, or the like.

In another possible implementation, if the second time domain resource includes M or more time domain resources for a DMRS, the terminal device may perform the downlink reception processing on the second time domain resource, where M is an integer greater than 0. If the second time domain resource includes less than M time domain resources for transmitting the DMRS, the terminal device may discard the downlink reception processing on the second time domain resource.

For the foregoing two possible implementations in which the terminal device performs the downlink reception processing on the second time domain resource, the terminal device may perform the downlink reception processing on data corresponding to the second time domain resource on the second time domain resource. In other words, only a portion of downlink data may be received (reception of downlink data corresponding to an originally overlapping part of uplink and downlink time domain resources is discarded). Because there are a large quantity of remaining time domain resources for downlink reception (the second time domain resources) or the remaining time domain resources for downlink reception (the second time domain resources) further include M or more time domain resources for transmitting the DMRS, reception processing of the downlink data on the second time domain resource does not affect processing (for example, demodulation) performed by the terminal device on the downlink data. Therefore, the terminal device may continue to perform the downlink reception processing. Alternatively, the terminal device may shift reception processing of data corresponding to the time domain resource for downlink reception to start from the second time domain resource. In other words, the terminal device may shift reception processing of all downlink data.

Optionally, if the DMRS has been received on the second time domain resource, all signals and/or data received on the second time domain resource may be demodulated.

For the foregoing two possible implementations in which the terminal device discards the downlink reception processing on the second time domain resource, it may be considered that, if there are few remaining time domain resources for downlink reception (the second time domain resources) or the remaining time domain resources for downlink reception (the second time domain resources) include less than M time domain resources for transmitting the DMRS, there is also a small amount of downlink data received on the second time domain resource. In this case, the terminal device may be unable to properly process the downlink data, for example, resulting in demodulation errors or incomplete data. Therefore, the terminal device may not need to perform downlink reception processing on the second time domain resource, thereby reducing signaling overheads of the terminal device, saving network resources, and avoiding unnecessary waste of network resources.

It may be understood that the terminal device preferentially completes transmission of an uplink signal when the time domain resource for downlink reception overlaps the time domain resource for uplink transmission. Correspondingly, the network device preferentially completes reception of the uplink signal.

Further, the network device may determine whether to perform downlink transmission on the second time domain resource, which may be specifically any one or more of the following possible implementations:
In a possible implementation, the network device may determine, based on the second time domain resource and the second threshold, whether to perform the downlink transmission on the second time domain resource. For example, the second threshold is a time domain resource length. If the second time domain resource is less than or equal to the second threshold, the network device may discard the downlink transmission on the second time domain resource. If the second time domain resource is greater than the second threshold, the network device may perform the downlink transmission on the second time domain resource. For another example, the second threshold may be a proportion. If a proportion of the second time domain resource in time domain resource for downlink transmission is less than or equal to the second threshold, the network device may discard downlink transmission on the second time domain resource. If the proportion of the second time domain resource in the time domain resource for downlink transmission is greater than the second threshold, the network device may perform the downlink transmission on the second time domain resource. The first threshold may be predefined in a protocol.

In another possible implementation, if the second time domain resource includes M or more time domain resources for transmitting the DMRS, the network device may perform the downlink transmission on the second time domain resource. If the second time domain resource includes less than M time domain resources for transmitting the DMRS, the terminal device may discard the downlink transmission on the second time domain resource.

For the foregoing two possible implementations in which the network device performs the downlink transmission on the second time domain resource, the network device may perform the downlink transmission on data corresponding to the second time domain resource on the second time domain resource. In other words, the network device sends only a portion of downlink data (transmission of downlink data corresponding to an originally overlapping part of uplink and downlink time domain resources is discarded). Because there are a large quantity of remaining time domain resources for downlink transmission (the second time domain resources) or the remaining time domain resources for downlink transmission (the second time domain resources) further include M or more time domain resources for transmitting the DMRS, transmission of the downlink data by the network device on the second time domain resource does not affect processing (for example, demodulation) by the terminal device on the downlink data. Therefore, the network device may perform downlink transmission of downlink data corresponding to the second time domain resource. Alternatively, the network device may shift transmission of all data corresponding to a time domain resource for downlink transmission to start from the second time domain resource, that is, may shift transmission of all downlink data.

Optionally, if the DMRS has been received on the second time domain resource, all signals and/or data received on the second time domain resource may be demodulated.

For the foregoing two possible implementations in which the network device discards the downlink transmission on the second time domain resource, it may be considered that, if there are few remaining time domain resources for downlink transmission (the second time domain resources) or the remaining time domain resources for downlink transmission (the second time domain resources) include less than M time domain resources for transmitting the DMRS, there is also a small amount of downlink data delivered by the network device on the second time domain resource. In this case, the terminal device may be unable to properly process the downlink data, for example, resulting in demodulation errors or incomplete data. Therefore, the network device may not need to perform the downlink transmission on the second time domain resource, thereby saving network resources and avoiding unnecessary waste of network resources.

It should be understood that in this embodiment, sequence numbers of the foregoing processes do not mean execution sequences. The execution sequences of the processes should be determined based on functions and internal logic of the processes, and should not be construed as any limitation on the implementation processes of embodiments of this application.

In the solution provided in this embodiment, for a terminal device with an HD-FDD duplex capability, when uplink and downlink timings overlap, the terminal device may preferentially complete transmission of an uplink signal. For a network device, when uplink and downlink timings overlap, the network device may preferentially complete reception of an uplink signal. The terminal device can be enabled to perform transmission when uplink and downlink timings overlap, thereby improving a capacity of a network system.

It may be understood that, to implement the functions in the foregoing embodiments, the terminal and the network device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

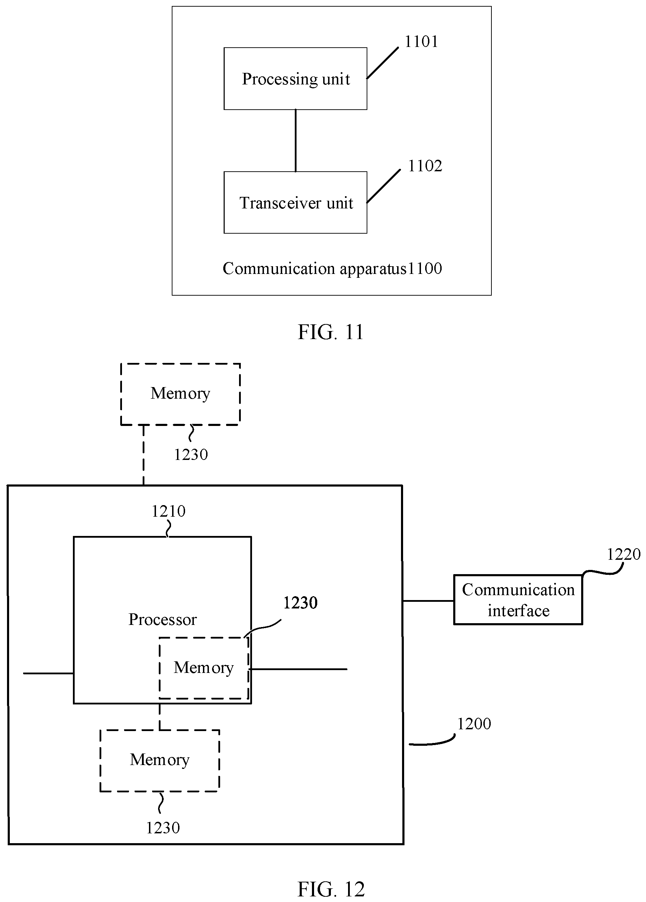

FIG. 11 and FIG. 12 are diagrams of possible structures of communication apparatuses according to embodiments of this application. The communication apparatuses may be configured to implement the functions of the terminal device or the network device in the foregoing method embodiments, and therefore can also implement the beneficial effects in the foregoing method embodiments. The communication apparatus may be a terminal device or a network device. The communication apparatus includes modules or units that are in a one-to-one correspondence with the methods/operations/steps/actions performed by the terminal device or the network device in the foregoing method embodiments. The unit may be a hardware circuit, or may be software, or may be implemented in a combination of the hardware circuit and the software. In this embodiment of this application, the communication apparatus may be one of the terminal devices 120a to 120j shown in FIG. 1, or may be the network device 110a or 110b shown in FIG. 1, or may be a module (for example, a chip) used in a terminal device or a network device.

As shown in FIG. 11, the communication apparatus 1100 may include a processing unit 1101 and a transceiver unit 1102. The communication apparatus 1100 is configured to implement functions of the terminal device or the network device in the method embodiment shown in FIG. 3 or FIG. 8.

When the communication apparatus 1100 is configured to implement the functions of the terminal device in the foregoing method embodiment shown in FIG. 3:
the processing unit 1101 is configured to determine a time domain resource position for downlink reception and a time domain resource position for uplink transmission; and
the transceiver unit 1102 is configured to preferentially complete reception of a downlink signal when a time domain resource for downlink reception overlaps a time domain resource for uplink transmission.

In a possible implementation, a start time for uplink transmission is earlier than an end time for downlink reception, or an end time for uplink transmission is later than a start time for downlink reception.

In a possible implementation, the transceiver unit 1102 is further configured to determine whether to perform uplink transmission on a first time domain resource. The first time domain resource is a remaining time domain resource in the time domain resource for uplink transmission other than a time domain resource that overlaps a time domain resource for downlink reception.

In a possible implementation, the transceiver unit 1102 determines whether to perform the uplink transmission on the first time domain resource, and is specifically configured to determine, based on the first time domain resource and a first threshold, whether to perform the uplink transmission on the first time domain resource.

In a possible implementation, the first threshold is a time domain resource length, and the transceiver unit 1102 determines, based on the first time domain resource and the first threshold, whether to perform the uplink transmission on the first time domain resource and is specifically configured to: if the first time domain resource is less than or equal to the first threshold, discard the uplink transmission on the first time domain resource; or if the first time domain resource is greater than the first threshold, perform the uplink transmission on the first time domain resource.

In a possible implementation, the first threshold is a proportion, and the transceiver unit 1102 determines, based on the first time domain resource and the first threshold, whether to perform the uplink transmission on the first time domain resource and is specifically configured to: if a proportion of the first time domain resource in the time domain resource for uplink transmission is less than or equal to the first threshold, discard the uplink transmission on the first time domain resource; or if a proportion of the first time domain resource in the time domain resource for uplink transmission is greater than the first threshold, perform the uplink transmission on the first time domain resource.

In a possible implementation, the first threshold is predefined in a protocol, or the first threshold is configured by a network device for the terminal device.

In a possible implementation, the transceiver unit 1102 determines whether to perform the uplink transmission on the first time domain resource and is specifically configured to: if the first time domain resource includes N or more time domain resources for transmitting a DMRS, perform the uplink transmission on the first time domain resource, where N is an integer greater than 0; or if the first time domain resource includes less than N time domain resources for transmitting a DMRS, discard the uplink transmission on the first time domain resource.

In a possible implementation, the transceiver unit 1102 performs the uplink transmission on the first time domain resource and is specifically configured to: perform uplink transmission of data corresponding to the first time domain resource on the first time domain resource; or shift transmission of data corresponding to the time domain resource for uplink transmission to start from the first time domain resource.

In a possible implementation, the time domain resource for downlink reception or the time domain resource for uplink transmission includes a TTI, and the TTI is one or more subframes, one or more slots, or one or more mini-slots.

In a possible implementation, the processing unit 1101 determines the time domain resource position for uplink transmission and is specifically configured to: receive a signal from the network device; determine a downlink system frame timing of the terminal device based on the signal; determine a first TA value based on a position of the terminal device; receive a second TA value from the network device; and determine the time domain resource position for uplink transmission based on the downlink system frame timing, the first TA value, and the second TA value.

When the communication apparatus 1100 is configured to implement the functions of the network device in the method embodiment shown in FIG. 3,
the processing unit 1101 is configured to determine a time domain resource position for downlink transmission and a time domain resource position for uplink reception; and
the transceiver unit 1102 is configured to preferentially complete transmission of a downlink signal when a time domain resource for downlink transmission overlaps a time domain resource for uplink reception.

In a possible implementation, a start time for uplink reception is earlier than an end time for downlink transmission, or an end time for uplink reception is later than a start time for downlink transmission.

In a possible implementation, the processing unit 1101 is further configured to determine whether to perform uplink reception processing on the first time domain resource. The first time domain resource is a remaining time domain resource in the time domain resource for uplink reception other than a time domain resource that overlaps a time domain resource for downlink transmission.

In a possible implementation, the processing unit 1101 determines whether to perform the uplink reception processing on the first time domain resource and is specifically configured to: determine, based on the first time domain resource and the first threshold, whether to perform the uplink reception processing on the first time domain resource.

In a possible implementation, the first threshold is a time domain resource length, and the processing unit 1101 determines, based on the first time domain resource and the first threshold, whether to perform the uplink reception processing on the first time domain resource and is specifically configured to: if the first time domain resource is less than or equal to the first threshold, discard the uplink reception processing on the first time domain resource; or if the first time domain resource is greater than the first threshold, perform the uplink reception processing on the first time domain resource.

In a possible implementation, the first threshold is a proportion, and the processing unit 1101 determines, based on the first time domain resource and the first threshold, whether to perform the uplink reception processing on the first time domain resource and is specifically configured to: if a proportion of the first time domain resource in the time domain resource for uplink reception is less than or equal to the first threshold, discard the uplink reception processing on the first time domain resource; or if a proportion of the first time domain resource in the time domain resource for uplink reception is greater than the first threshold, perform the uplink reception processing on the first time domain resource.

In a possible implementation, the first threshold is predefined in a protocol.

In a possible implementation, the processing unit 1101 determines whether to perform the uplink reception processing on the first time domain resource and is specifically configured to: if the first time domain resource includes N or more time domain resources for transmitting a DMRS, perform the uplink reception processing on the first time domain resource, where N is an integer greater than 0; or if the first time domain resource includes less than N time domain resources for transmitting a DMRS, discard the uplink reception processing on the first time domain resource.

In a possible implementation, the processing unit 1101 performs the uplink reception processing on the first time domain resource and is specifically configured to: perform uplink reception processing on data corresponding to the first time domain resource on the first time domain resource; or shift reception processing of data corresponding to the time domain resource for uplink reception to start from the first time domain resource.

In a possible implementation, the time domain resource for downlink transmission or the time domain resource for uplink reception includes a TTI, and the TTI includes one or more subframes, one or more slots, or one or more mini-slots.

In a possible implementation, the transceiver unit 1102 is further configured to: send a signal to the terminal device, where the signal is used by the terminal device to determine a downlink system frame timing; and send a second TA value to the terminal device.

For more detailed descriptions of the processing unit 1101 and the transceiver unit 1102, refer to related descriptions in the method embodiment shown in FIG. 3.

When the communication apparatus 1100 is configured to implement the functions of the terminal device in the foregoing method embodiment shown in FIG. 8:
the processing unit 1101 is configured to determine a time domain resource position for downlink reception and a time domain resource position for uplink transmission; and
the transceiver unit 1102 is configured to preferentially complete transmission of an uplink signal when a time domain resource for downlink reception overlaps a time domain resource for uplink transmission.

In a possible implementation, a start time for uplink transmission is earlier than an end time for downlink reception, or an end time for uplink transmission is later than a start time for downlink reception.

In a possible implementation, the processing unit 1101 is further configured to determine whether to perform downlink reception processing on a second time domain resource. The second time domain resource is a remaining time domain resource in the time domain resource for downlink reception other than a time domain resource that overlaps a time domain resource for uplink transmission.

In a possible implementation, the processing unit 1101 determines whether to perform the downlink reception processing on the second time domain resource, and is specifically configured to determine, based on the second time domain resource and a second threshold, whether to perform the downlink reception processing on the second time domain resource.

In a possible implementation, the second threshold is a time domain resource length, and the processing unit 1101 determines, based on the second time domain resource and the second threshold, whether to perform the downlink reception processing on the second time domain resource and is specifically configured to: if the second time domain resource is less than or equal to the second threshold, discard the downlink reception processing on the second time domain resource; or if the second time domain resource is greater than the second threshold, perform the downlink reception processing on the second time domain resource.

In a possible implementation, the second threshold is a proportion, and the processing unit 1101 determines, based on the second time domain resource and the second threshold, whether to perform the downlink reception processing on the second time domain resource and is specifically configured to: if a proportion of the second time domain resource in the time domain resource for downlink reception is less than or equal to the second threshold, discard the downlink reception processing on the second time domain resource; or if a proportion of the second time domain resource in the time domain resource for downlink reception is greater than the second threshold, perform the downlink reception processing on the second time domain resource.

In a possible implementation, the second threshold is predefined in a protocol, or the second threshold is configured by a network device for the terminal device.

In a possible implementation, the processing unit 1101 determines whether to perform the downlink reception processing on the second time domain resource and is specifically configured to: if the second time domain resource includes M or more time domain resources for transmitting a DMRS, perform the downlink reception processing on the second time domain resource, where M is an integer greater than 0; or if the second time domain resource includes less than M time domain resources for transmitting a DMRS, discard the downlink reception processing on the second time domain resource.

In a possible implementation, the time domain resource for downlink reception or the time domain resource for uplink transmission includes a TTI, and the TTI includes one or more subframes, one or more slots, or one or more mini-slots.

In a possible implementation, the processing unit 1101 determines the time domain resource position for uplink transmission and is specifically configured to: receive a signal from the network device; determine a downlink system frame timing of the terminal device based on the signal; determine a first TA value based on a position of the terminal device; receive a second TA value from the network device; and determine the time domain resource position for uplink transmission based on the downlink system frame timing, the first TA value, and the second TA value.

When the communication apparatus 1100 is configured to implement the functions of the network device in the method embodiment shown in FIG. 8,
the processing unit 1101 is configured to determine a time domain resource position for downlink transmission and a time domain resource position for uplink reception; and
the transceiver unit 1102 is configured to preferentially complete reception of an uplink signal when a time domain resource for downlink transmission overlaps a time domain resource for uplink reception.

In a possible implementation, a start time for uplink reception is earlier than an end time for downlink reception, or an end time for uplink transmission is later than a start time for downlink reception.

In a possible implementation, the transceiver unit 1102 is further configured to determine whether to perform downlink transmission on the second time domain resource. The second time domain resource is a remaining time domain resource in the time domain resource for downlink transmission other than a time domain resource that overlaps a time domain resource for uplink reception.

In a possible implementation, the transceiver unit 1102 determines whether to perform the downlink transmission on the second time domain resource, and is specifically configured to determine, based on the second time domain resource and a second threshold, whether to perform the downlink transmission on the second time domain resource.

In a possible implementation, the second threshold is a time domain resource length, and the transceiver unit 1102 determines, based on the second time domain resource and the second threshold, whether to perform the downlink transmission on the second time domain resource and is specifically configured to: if the second time domain resource is less than or equal to the second threshold, discard the downlink transmission on the second time domain resource; or if the second time domain resource is greater than the second threshold, perform the downlink transmission on the second time domain resource.

In a possible implementation, the second threshold is a proportion, and the transceiver unit 1102 determines, based on the second time domain resource and the second threshold, whether to perform the downlink transmission on the second time domain resource and is specifically configured to: if a proportion of the second time domain resource in the time domain resource for downlink reception is less than or equal to the second threshold, discard the downlink transmission on the second time domain resource; or if a proportion of the second time domain resource in the time domain resource for downlink reception is greater than the second threshold, perform the downlink transmission on the second time domain resource.

In a possible implementation, the second threshold is predefined in a protocol.

In a possible implementation, the transceiver unit 1102 determines whether to perform the downlink transmission on the second time domain resource and is specifically configured to: if the second time domain resource includes M or more time domain resources for transmitting a DMRS, perform the downlink transmission on the second time domain resource, where M is an integer greater than 0; or if the second time domain resource includes less than M time domain resources for transmitting a DMRS, discard the downlink transmission on the second time domain resource.

In a possible implementation, the transceiver unit 1102 performs the downlink transmission on the second time domain resource and is specifically configured to: perform downlink transmission on data corresponding to the second time domain resource on the second time domain resource; or shift transmission of data corresponding to the time domain resource for downlink transmission to start from the second time domain resource.

In a possible implementation, the time domain resource for downlink transmission or the time domain resource for uplink reception includes a TTI, and the TTI includes one or more subframes, one or more slots, or one or more mini-slots.

In a possible implementation, the transceiver unit 1102 is further configured to: send a signal to the terminal device, where the signal is used by the terminal device to determine a downlink system frame timing; and send a second TA value to the terminal device.

For more detailed descriptions of the processing unit 1101 and the transceiver unit 1102, refer to related descriptions in the method embodiment shown in FIG. 8.

As shown in FIG. 12, a communication apparatus 1200 is provided, and is configured to implement functions of the terminal device or the network device. The apparatus may be a communication device or an apparatus used in the communication device, and the communication device may be a terminal device or a network device. The apparatus used in the communication device may be a chip system or a chip in the communication device. The chip system may include a chip, or may include a chip and another discrete component.

The communication apparatus 1200 includes at least one processor 1210, configured to implement a processing function of a device (for example, a network device or a terminal device) in the methods provided in embodiments of this application. The communication apparatus 1200 may further include a communication interface 1220, configured to implement a receiving and sending operation of a device (for example, a network device or a terminal device) in the methods provided in embodiments of this application. In this embodiment of this application, the communication interface may be a transceiver, a circuit, a bus, a module, or another type of communication interface, and is configured to communicate with another device through a transmission medium. For example, the communication interface 1220 is configured for an apparatus in the communication apparatus 1200 to communicate with another device. The processor 1210 receives and sends data through the communication interface 1220, and is configured to implement the methods in the foregoing method embodiments.

The communication apparatus 1200 may further include at least one memory 1230, configured to store program instructions and/or data. The memory 1230 is coupled to a processor 1210. The coupling in embodiments of this application is indirect coupling or a communication connection between apparatuses, units, or modules for information exchange between the apparatuses, the units, or the modules, and may be in electrical, mechanical, or other forms. The processor 1210 may cooperate with the memory 1230. The processor 1210 may execute the program instructions stored in the memory 1230. At least one of the at least one memory may be included in the processor.

A specific connection medium between the communication interface 1220, the processor 1210, and the memory 1230 is not limited in this embodiment of this application. In this embodiment of this application, in FIG. 12, the memory 1230, the processor 1210, and the communication interface 1220 are connected through a bus. The bus is indicated by using a bold line in FIG. 12. A connection manner between other components is merely an example for description, and is not limited thereto. The bus may be classified into an address bus, a data bus, a control bus, and the like. For ease of representation, only one thick line is used to represent the bus in FIG. 12, but this does not mean that there is only one bus or only one type of bus.

When the communication apparatus 1200 is specifically the apparatus used in the device (for example, a network device or a terminal device), for example, when the communication apparatus 1200 is specifically the chip or the chip system, the communication interface 1220 may output or receive a baseband signal. When the communication apparatus 1200 is specifically the device (for example, a network device or a terminal device), the communication interface 1220 may output or receive a radio frequency signal. In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

It should be noted that the communication interface 1220 may be configured to perform functions of the transceiver unit 1102, and the processor 1210 may be configured to perform functions of the processing unit 1101. This is not described herein again.

When the communication apparatus is a chip used in the terminal device, the chip in the terminal device implements functions of the terminal device in the foregoing method embodiments, and the chip in the terminal device receives information from another network element. Alternatively, the chip in the terminal device sends information to another network element.

When the communication apparatus is a chip used in the network device, the chip in the network device implements functions of the network device in the foregoing method embodiments. The chip in the network device receives information from another network element. Alternatively, the chip in the network device sends information to another network element.

It may be understood that the processor in this embodiment of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

Methods steps in the embodiments of this application may be implemented by hardware, or may be implemented by a processor by executing a software instruction. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in the ASIC. In addition, the ASIC may be located in a network device or a terminal device. Certainly, the processor and the storage medium may alternatively exist in the terminal device or the network device as discrete components.

In the foregoing embodiments, all or some of the foregoing embodiments may be implemented by using software, hardware, firmware, or any combination thereof. When software is used for implementation, all or some of the foregoing embodiments may be implemented in a form of a computer program product. The computer program product includes one or more computer programs or instructions. When the computer programs or the instructions are loaded and executed on a computer, the procedures or functions in embodiments of this application are completely or partially performed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk, or a magnetic tape; or may be an optical medium, for example, a DVD; or may be a semiconductor medium, for example, a solid-state drive (solid state disk, SSD).

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numerical numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

An embodiment of this application further provides a computer-readable storage medium. The computer-readable storage medium stores computer-executable instructions. When the computer-executable instructions are executed, the methods performed by a terminal device or a network device in the foregoing method embodiments are implemented.

An embodiment of this application further provides a computer program product. The computer program product includes a computer program. When the computer program is executed, the methods performed by a terminal device or a network device in the foregoing method embodiments are implemented.

An embodiment of this application further provides a communication system. The communication system includes a terminal device or a network device. The terminal device is configured to perform the methods performed by the terminal device in the foregoing method embodiments. The network device is configured to perform the methods performed by the network device in the foregoing method embodiments.

It should be noted that, for brief description, the foregoing method embodiments are represented as a series of actions. However, a person skilled in the art should understand that this application is not limited to the described order of the actions, because according to this application, some steps may be performed in other orders or simultaneously. In addition, a person skilled in the art should also understand that embodiments described in this specification are example embodiments, and the related actions and modules are not necessarily mandatory to this application.

The descriptions of embodiments provided in this application may refer to each other, and the descriptions of embodiments have different focuses. For a part not described in detail in an embodiment, refer to the related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended for describing the technical solutions of this application rather than limiting this application. Although this application is described in detail with reference to the foregoing embodiments, a person of ordinary skill in the art should understand that modifications can still be made to the technical solutions described in the foregoing embodiments or equivalent replacements can be made to some or all technical features thereof. These modifications or replacements do not make the essence of the corresponding technical solutions depart from the scope of the technical solutions of embodiments of this application.

## Claims

1. A communication method, applied to a terminal device, wherein the method comprises:
determining a time domain resource position for downlink reception and a time domain resource position for uplink transmission; and
preferentially completing reception of a downlink signal when the time domain resource position for downlink reception overlaps the time domain resource position for uplink transmission.

2. The method according to claim 1, wherein a start time of the time domain resource position for uplink transmission is earlier than an end time of the time domain resource position for downlink reception, or an end time of the time domain resource position for uplink transmission is later than a start time of the time domain resource position for downlink reception.

3. The method according to claim 1 or 2, wherein the method further comprises:
determining whether to perform uplink transmission on a first time domain resource, wherein the first time domain resource is a remaining time domain resource in the time domain resource for uplink transmission other than a time domain resource that overlaps a time domain resource for downlink reception.

4. The method according to claim 3, wherein determining whether to perform the uplink transmission on the first time domain resource comprises:
determining, based on the first time domain resource and a first threshold, whether to perform the uplink transmission on the first time domain resource.

5. The method according to claim 4, wherein the first threshold is a time domain resource length, and determining, based on the first time domain resource and the first threshold, whether to perform the uplink transmission on the first time domain resource comprises:
if the first time domain resource is less than or equal to the first threshold, discarding the uplink transmission on the first time domain resource; or
if the first time domain resource is greater than the first threshold, performing the uplink transmission on the first time domain resource.

6. The method according to claim 4, wherein the first threshold is a proportion, and determining, based on the first time domain resource and the first threshold, whether to perform the uplink transmission on the first time domain resource comprises:
if a proportion of the first time domain resource in the time domain resource for uplink transmission is less than or equal to the first threshold, discarding the uplink transmission on the first time domain resource; or
if a proportion of the first time domain resource in the time domain resource for uplink transmission is greater than the first threshold, performing the uplink transmission on the first time domain resource.

7. The method according to any one of claims 4 to 6, wherein the first threshold is predefined in a protocol, or the first threshold is configured by a network device for the terminal device.

8. The method according to claim 3, wherein determining whether to perform the uplink transmission on the first time domain resource comprises:
if the first time domain resource comprises N or more time domain resources for transmitting a demodulation reference signal DMRS, performing the uplink transmission on the first time domain resource, wherein N is an integer greater than 0; or
if the first time domain resource comprises less than N time domain resources for transmitting a DMRS, discarding the uplink transmission on the first time domain resource.

9. The method according to any one of claim 5, 6, or 8, wherein performing the uplink transmission on the first time domain resource comprises:
performing uplink transmission of data corresponding to the first time domain resource on the first time domain resource; or
shifting transmission of data corresponding to the time domain resource for uplink transmission to start from the first time domain resource.

10. The method according to any one of claims 1 to 9, wherein the time domain resource for downlink reception or the time domain resource for uplink transmission comprises a transmission time interval TTI, and the TTI is one or more subframes, one or more slots, or one or more mini-slots.

11. The method according to any one of claims 1 to 10, wherein determining the time domain resource position for uplink transmission comprises:
receiving a signal from the network device, and determining a downlink system frame timing of the terminal device based on the signal;
determining a first timing advance TA value based on a position of the terminal device;
receiving a second TA value from the network device; and
determining the time domain resource position for uplink transmission based on the downlink system frame timing, the first TA value, and the second TA value.

12. A communication method, applied to a terminal device, wherein the method comprises:
determining a time domain resource position for downlink reception and a time domain resource position for uplink transmission; and
preferentially completing transmission of an uplink signal when the time domain resource position for downlink reception overlaps the time domain resource position for uplink transmission.

13. The method according to claim 12, wherein a start time of the time domain resource position for uplink transmission is earlier than an end time of the time domain resource position for downlink reception, or an end time of the time domain resource position for uplink transmission is later than a start time of the time domain resource position for downlink reception.

14. The method according to claim 12 or 13, wherein the method further comprises:
determining whether to perform downlink reception processing on a second time domain resource, wherein the second time domain resource is a remaining time domain resource in the time domain resource for downlink reception other than a time domain resource that overlaps the time domain resource for uplink transmission.

15. The method according to claim 14, wherein determining whether to perform the downlink reception processing on the second time domain resource comprises:
determining, based on the second time domain resource and a second threshold, whether to perform the downlink reception processing on the second time domain resource.

16. The method according to claim 15, wherein the second threshold is a time domain resource length, and determining, based on the second time domain resource and the second threshold, whether to perform the downlink reception processing on the second time domain resource comprises:
if the second time domain resource is less than or equal to the second threshold, discarding the downlink reception processing on the second time domain resource; or
if the second time domain resource is greater than the second threshold, performing the downlink reception processing on the second time domain resource.

17. The method according to claim 15, wherein the second threshold is a proportion, and determining, based on the second time domain resource and the second threshold, whether to perform the downlink reception processing on the second time domain resource comprises:
if a proportion of the second time domain resource in the time domain resource for downlink reception is less than or equal to the second threshold, discarding the downlink reception processing on the second time domain resource; or
if a proportion of the second time domain resource in the time domain resource for downlink reception is greater than the second threshold, performing the downlink reception processing on the second time domain resource.

18. The method according to any one of claims 15 to 17, wherein the second threshold is predefined in a protocol, or the second threshold is configured by a network device for the terminal device.

19. The method according to claim 14, wherein determining whether to perform the downlink reception processing on the second time domain resource comprises:
if the second time domain resource comprises M or more time domain resources for transmitting a demodulation reference signal DMRS, performing the downlink reception processing on the second time domain resource, wherein M is an integer greater than 0; or
if the second time domain resource comprises less than M time domain resources for transmitting a DMRS, discarding the downlink reception processing on the second time domain resource.

20. The method according to any one of claims 12 to 19, wherein the time domain resource for downlink reception or the time domain resource for uplink transmission comprises a transmission time interval TTI, and the TTI comprises one or more subframes, one or more slots, or one or more mini-slots.

21. The method according to any one of claims 12 to 20, wherein determining the time domain resource position for uplink transmission comprises:
receiving a signal from the network device, and determining a downlink system frame timing of the terminal device based on the signal;
determining a first timing advance TA value based on a position of the terminal device;
receiving a second TA value from the network device; and
determining the time domain resource position for uplink transmission based on the downlink system frame timing, the first TA value, and the second TA value.

22. A communication method, applied to a network device, wherein the method comprises:
configuring a first threshold or a second threshold for the terminal device, wherein the first threshold is used by the terminal device to determine whether to perform uplink transmission on a first time domain resource, the first time domain resource is a remaining time domain resource in a time domain resource for uplink transmission other than a time domain resource that overlaps a time domain resource for downlink reception, the second threshold is used by the terminal device to determine whether to perform downlink reception processing on a second time domain resource, and the second time domain resource is a remaining time domain resource in a time domain resource for downlink reception other than a time domain resource that overlaps the time domain resource for uplink transmission.

23. The method according to claim 22, wherein the method further comprises:
transmitting a signal to the terminal device, wherein the signal is used by the terminal device to determine a downlink system frame timing; and
transmitting a second timing advance TA value to the terminal device.

24. A communication apparatus, comprising a processor and a memory, wherein the processor is configured to execute a computer program or instructions in the memory, and when the computer program or the instructions are executed by the processor, the apparatus is enabled to perform the method according to any one of claims 1 to 11, or implement the method according to any one of claims 12 to 21, or implement the method according to either of claims 22 and 23.

25. A computer-readable storage medium, wherein the computer-readable storage medium stores a computer program or computer instructions, and when the computer program or the computer instructions are executed by a processor, a terminal device is enabled to perform the method according to any one of claims 1 to 11 or claims 12 to 21, or a network device is enabled to perform the method according to either of claims 22 and 23.

26. A chip system, comprising at least one processor, a memory, and an interface circuit, wherein the memory, the interface circuit, and the at least one processor are interconnected through a line, the at least one memory stores instructions, and when the instructions are executed by the processor, a terminal device is enabled to perform the method according to any one of claims 1 to 11 or claims 12 to 21, or a network device is enabled to perform the method according to either of claims 22 and 23.

27. A communication system, comprising a terminal device and a network device, wherein the terminal device is configured to perform the method according to any one of claims 1 to 11 or claims 12 to 21, and the network device is configured to perform the method according to either of claims 22 and 23.
